# EUROPEAN PATENT SPECIFICATION

(11) **EP 4 590 936 B1**
(45) Date of publication and mention of the grant of the patent: **11.11.2026**
(21) Application number: 23767947.7
(22) Date of filing: 30.08.2023
(51) Int. Cl.: F01C 21/10, F04C 25/02, F04C 27/00

(54) **SHELL STATOR FOR A VACUUM PUMP**
MANTELSTATOR FÜR EINE VAKUUMPUMPE
STATOR COQUE POUR UNE POMPE À VIDE

(30) Priority: 22.09.2022 GB 202213812; 08.06.2023 GB 202308577
(43) Date of publication of application: 30.07.2025
(73) Proprietor: Edwards Limited, Burgess Hill, Sussex RH15 9TW (GB)
(72) Inventor: HOCKLEY, Robin, Burgess Hill Sussex RH15 9TW (GB); HOLBROOK, Alan Ernest Kinnaird, Burgess Hill Sussex RH15 9TW (GB)
(74) Representative: Ford, Alexander
(86) International application number: PCT/GB2023/052235
(87) International publication number: WO 2024/062215

(56) References cited:
- GB-A- 2 559 136
- US-A1- 2004 017 049
- US-B2- 6 572 351
- US-B2- 9 879 677

## Description

### FIELD OF THE INVENTION

The field of the invention relates to a shell stator for vacuum pump, and a vacuum pump.

### BACKGROUND

Rotating machines, such as compressors or vacuum pumps, need to be carefully designed and manufactured in order for the moving parts to cooperate with each other accurately. Providing effective seals to seal the machine tends to be problematic, particularly when fluid flow is encouraged by a pressure difference between the machine and ambient environment. It is desired to provide improved sealing.

A prior art system having the features of the preamble to claim 1 is disclosed in GB 2 559 136 A.

### SUMMARY OF THE INVENTION

In an aspect, there is provided a system according to claim 1.

The protrusion may be a continuous curved hump.

The indentation may be a continuous curved indentation.

The seal groove may comprise a plurality of protrusions formed in the first side wall and extending towards the second side wall, and a plurality of indentations formed in the second side wall, each indentation of the plurality of indentations being opposite to a respective protrusion of the plurality of protrusions.

The seal groove may be formed in a joining surface of the shell stator, the joining surface being for receiving a further shell stator thereby to define at least one pumping chamber.

The seal groove may be formed in an end surface of the shell stator, the end surface being for receiving an end piece.

The shell stator may further comprise: a further seal groove formed in the surface of the shell stator, the further seal groove being defined by a third side wall, a fourth side wall opposite to the third side wall, and a further bottom surface disposed between the third side wall and the fourth side wall, the further bottom surface being opposite to an opening of the further seal groove. The further seal groove may comprise: a further protrusion formed in the third side wall and extending towards the fourth side wall; and a further indentation formed in the fourth side wall opposite to the further protrusion. The first side wall and the third side wall may be the outermost walls. The second side wall and the fourth side wall may be the innermost walls. The shell stator may further comprise a curved seal groove formed in an end surface of the shell stator, the curved seal groove being formed between the seal groove and the further seal groove.

A thickness of the sealing gasket in a direction from the first side wall to the second side wall may be less than the size of the seal groove in said direction.

The sealing gasket may have substantially uniform thickness.

In a further aspect, there is provided a vacuum pump, comprising: shell stators defining at least one pumping chamber, at least one of the shell stators being a shell stator according to any preceding aspect; end pieces mounted at either end of the shell stators; and a sealing gasket disposed between the shell stators and the end pieces, the sealing gasket being disposed in the seal groove; wherein the protrusion biases at least part of the sealing gasket against the second side wall.

The at least one of the shell stators may further comprise a further seal groove formed in the surface of that shell stator, the further seal groove being defined by a third side wall, a fourth side wall opposite to the third side wall, and a further bottom surface disposed between the third side wall and the fourth side wall, the further bottom surface being opposite to an opening of the further seal groove. The further seal groove may comprise: a further protrusion formed in the third side wall and extending towards the fourth side wall; and a further indentation formed in the fourth side wall opposite to the further protrusion. The first side wall and the third side wall may be the outermost walls relative to the at least one pumping chamber. The second side wall and the fourth side wall may be the innermost walls relative to the at least one pumping chamber. The sealing gasket may be also disposed in the further seal groove. The protrusion and the further protrusion may bias at least part of the sealing gasket against the innermost side walls.

The vacuum pump may further comprising two closed-shape sealing grooves, each closed-shape sealing groove being formed in a respective end of the shell stators. The sealing gasket may comprise two sealing members each defining a closed shape, each of the sealing members being disposed in a respective one of the closed-shape sealing grooves. Each closed-shape sealing groove may be defined by an outer wall, an inner wall opposite to the outer wall, and a bottom surface disposed between the outer wall and the inner wall, the bottom surface being opposite to an opening of the closed-shape sealing groove. Each closed-shape sealing groove may comprise: a protrusion formed in the outer wall and extending towards the inner wall; and an indentation formed in the inner wall opposite to the protrusion; and the protrusion of a closed-shape sealing groove biases at least part of the sealing members disposed in that closed-shape sealing groove against the inner wall of that closed-shape sealing groove.

### BRIEF DESCRIPTION OF THE DRAWINGS

The present invention will now be described, by way of example only, with reference to the accompanying drawings, in which:
Figure 1 is a schematic illustration (not to scale) showing a housing of a vacuum pump;
Figure 2 is a schematic illustration (not to scale) of a sealing gasket;
Figure 3 is a further schematic illustration (not to scale) of the sealing gasket;
Figure 4 is a process flow chart showing certain steps of a method of incorporating the sealing gasket into the housing;
Figure 5 is a schematic illustration (not to scale) showing the sealing gasket located in the housing;
Figure 6 is a schematic illustration (not to scale) showing a plan view of a first longitudinal sealing member located in a first longitudinal seal groove; and
Figure 7 is a schematic illustration (not to scale) showing a first closed-shape sealing member located in a first closed-shape seal groove.

### DETAILED DESCRIPTION

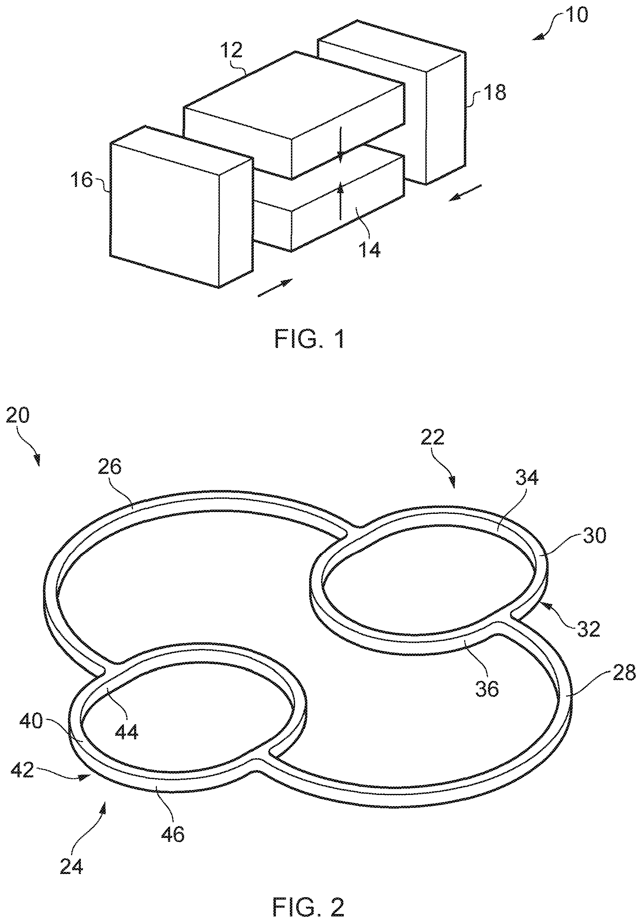

Figure 1 is a schematic illustration (not to scale) showing a housing 10 of a vacuum pump, according to one embodiment. The housing 10 comprises a pair of shell stators 12, 14 and a pair of end plates 16, 18. The shell stators 12, 14 define recesses which receive components of the vacuum pump. The shell stators 12, 14 are brought together to retain the components in those recesses. The end plates 16, 18 are then brought to retain the shell stators 12, 14. This provides for particularly convenient assembly of the vacuum pump.

In other words, the housing 10 of the vacuum pump may be formed from multiple component parts, including shells 12, 14 and end plates 16, 18 which need to be sealed upon assembly. In the arrangement shown in Figure 1, the stator is formed by bringing together the two housing parts or shells 12, 14 which are then retained between the pair of end plates 16, 18.

As will be explained in more detail below, in this embodiment, to adequately seal the shell stators 12, 14 together, one or more (e.g. two) longitudinal seals are located along the joining faces of the shell stators 12, 14. Also, to ensure adequate sealing between the shell stators 12, 14 and the respective end plates 16, 18, a pair of seals that define closed shapes (e.g. annular seals in some embodiments) is located between the end plates 16,18 and the shell stators 12, 14.

Figure 2 is a schematic illustration (not to scale) of a sealing gasket 20 for sealing the housing 10, according to one embodiment.

The sealing gasket 20 comprises a first closed-shape sealing member 22 (which may be approximately annular), a second closed-shape sealing member 24 (which may be approximately annular), a first longitudinal sealing member 26, and a second longitudinal sealing member 28.

The first closed-shape sealing member 22 comprises a first surface 30, a second surface 32 opposite the first surface 30, a first radially inner surface 34, and a first radially outer surface 36 opposite to the first radially inner surface 34. The first radially inner surface 34 and the first radially outer surface 36 are disposed between the first surface 30 and the second surface 32.

The second closed-shape sealing member 24 comprises a third surface 40, a fourth surface 42 opposite the third surface 40, a second radially inner surface 44, a second radially outer surface 46 opposite to the second radially inner surface 44. The second radially inner surface 44 and the second radially outer surface 46 are disposed between the third surface 40 and the fourth surface 42.

The first longitudinal sealing member 26 is connected or attached between the first radially outer surface 36 (of the first closed-shape sealing member 22) and the second radially outer surface 46 (of the second closed-shape sealing member 24).

The second longitudinal sealing member 28 is connected or attached between the first radially outer surface 36 (of the first closed-shape sealing member 22) and the second radially outer surface 46 (of the second closed-shape sealing member 24).

The second longitudinal sealing member 28 is arranged opposite to the first longitudinal sealing member 26. That is to say, the second longitudinal sealing member 28 is connected to the first and second closed-shape sealing members 22, 24 and at an opposite side of the first and second closed-shape sealing members 22, 24 to the side at which the first longitudinal sealing member 26 is connected to the first and second closed-shape sealing members 22, 24.

The first closed-shape sealing member 22 defines a closed shape and may be a ring-shaped sealing member. The first closed-shape sealing member 22 has a square or rectangular cross-section.

The second closed-shape sealing member 24 defines a closed shape and may be a ring-shaped sealing member. The second closed-shape sealing member 24 has a square or rectangular cross-section.

The first longitudinal sealing member 26 may be an O-ring cord, which may have a circular cross-section. The first longitudinal sealing member 26 has a square or rectangular cross-section.

The second longitudinal sealing member 28 may be an O-ring cord, which may have a circular cross-section. The second longitudinal sealing member 28 has a square or rectangular cross-section.

In this embodiment, the sealing gasket 20 is a continuous one-piece sealing gasket.

The sealing gasket 20 is made of a deformable or flexible material, such as an elastomer material (e.g. a fluoroelastomers (FKM/FPM) or a perfluoroelastomer (FFKM)) or silicon, such that the sealing gasket 20 is deformable or flexible. Thus, the sealing gasket 20 may be deformed into a desired shape or configuration suitable for use as a seal for the housing 10.

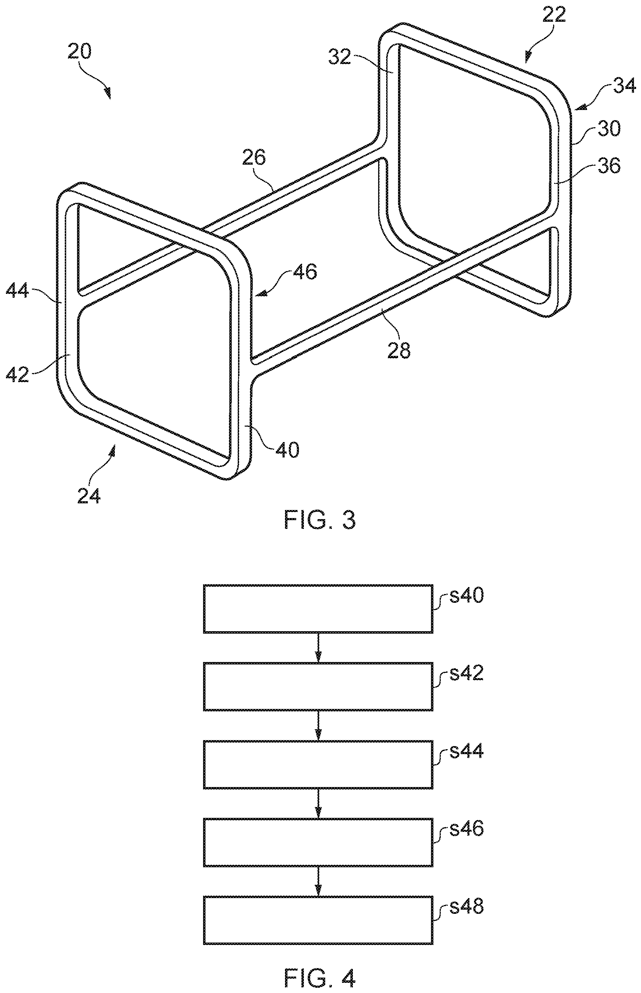

Figure 3 is a schematic illustration (not to scale) showing the sealing gasket 20 that has been deformed into a configuration that may be suitable for sealing the housing 10.

In this configuration, the first and second closed-shape sealing members 22, 24 are square ring-shaped members with curved corners. The configuration has major faces (which are the first radially inner surface 34 and the first radially outer surface 36 of the first closed-shape sealing member 22, and the second radially inner surface 44 and the second radially outer surface 46 of the second closed-shape sealing member 24) which, in use, abut against major faces of the end plates 16, 18 and the adjacent faces of the shell stators 12, 14. In this example, the first and second closed-shape sealing members 22, 24 have substantially planar, axially outer faces, provided by the first radially inner surface 34 and the second radially inner surface 44 respectively. The first and second closed-shape sealing members 22, 24 have substantially planar, axially inner faces, provided by the first radially outer surface 36 and the second radially outer surface 46 respectively. The longitudinal sealing members 26 are connected between the facing axially inner faces of the first and second closed-shape sealing members 22, 24 (i.e., between the first radially outer surface 36 and the second radially outer surface 46). The first and second closed-shape sealing members 22, 24 have substantially constant thicknesses.

Figure 4 is a process flow chart showing certain steps (s40 - s48) of a method of fitting, installing, or incorporating the sealing gasket 20 into the housing 10.

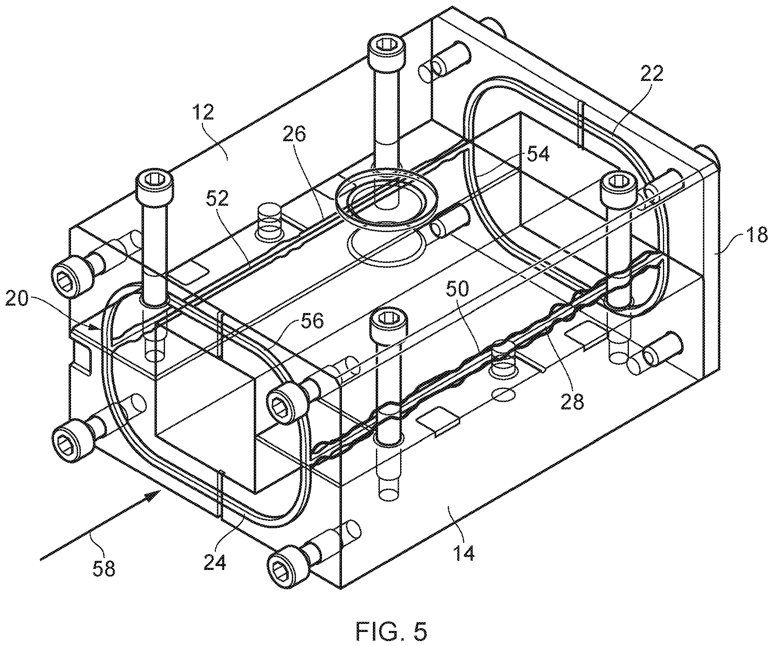

Figure 5 is a schematic illustration (not to scale) illustrating the sealing gasket 20 incorporated into the housing 10.

At step s40, the shell stator 14 is provided, into which components of the vacuum pump may be assembled.

At step s42, the sealing gasket 20 is positioned relative to the shell stator 14 such that the first and second longitudinal sealing members 26, 28 are located along the joining face of shell stator 14. The longitudinal sealing members 26, 28 are located in respective longitudinal seal grooves 50, 52 extending along the joining face of shell stator 14, as depicted in Figure 5.

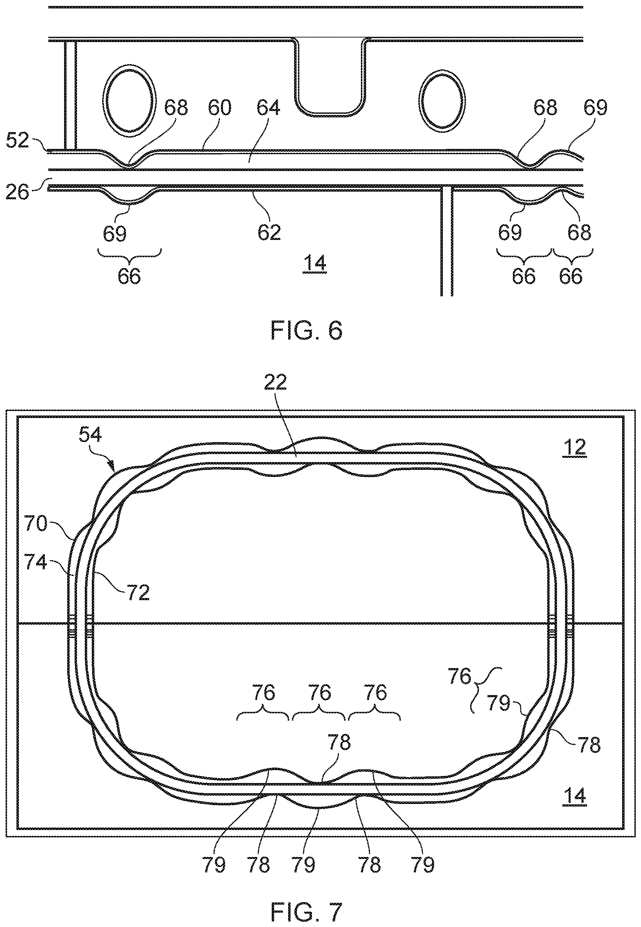

The longitudinal seal grooves 50, 52 and the locating therein of the longitudinal sealing members 26, 28 is described in more detail later below with reference to Figure 6.

At step s44, the shell stator 12 is brought into close contact with the longitudinal sealing members 26, 28. In particular, the shell stator 12 is moved onto the longitudinal sealing members 26, 28 towards the joining face of shell stator 14. Figure 5 shows the shell stators 12, 14 that have been arranged in this way.

At step s46, the shell stators 12, 14 are clamped together, which compresses the longitudinal sealing members 26, 28. The shell stators 12, 14 are fixed together to form pump chambers.

After step s46, the first and second closed-shape sealing members 22, 24 tend to extend or protrude axially from the axial ends of the assembled together shell stators 12, 14.

At step s48, the end plates 16, 18 are brought together to compress the first and second closed-shape sealing members 22, 24 in the axial (i.e. longitudinal) direction.

The first and second closed-shape sealing members 22, 24 are located in closed-shape (e.g. loop) seal grooves 54, 56 located in the shell stators 12, 14 and/or the end plates 16, 18.

The closed-shape seal grooves 54, 56 and the locating therein of the first and second closed-shape sealing members 22, 24 is described in more detail later below with reference to Figure 7.

Referring to Figure 5, the end plate 18 is shown having been moved onto the first annular sealing member 22 at a first end of the assembled together shell stators 12, 14. The end plate 16 may be moved onto the second annular sealing member 24 at a second end (opposite to the first end) of the assembled together shell stators 12, 14, as indicated in Figure 5 by an arrow and the reference numeral 58.

Thus, a method of fitting, installing, or incorporating the sealing gasket 20 into the housing 10 is provided.

Figure 6 is a schematic illustration (not to scale) showing a plan view of the first longitudinal sealing member 26 located in the first longitudinal seal groove 52. It will be appreciated by those skilled in the art that the second longitudinal sealing member 28 is located in the second longitudinal seal groove 50 in similar fashion.

The first longitudinal seal groove 52 extends along, and is formed in, the joining face of shell stator 14.

The first longitudinal seal groove 52 comprises a first side wall 60, a second side wall 62 opposite to the first side wall 60, and a bottom surface 64 disposed between the first side wall 60 and the second side wall 62. The first side wall 60 is the surface of the first longitudinal seal groove 52 furthest from the pumping chamber(s). The second side wall 62 is the surface of first longitudinal seal groove 52 closest to the pumping chamber(s). The bottom surface 64 is opposite to an opening of the first longitudinal seal groove 52.

The first longitudinal seal groove 52 comprises biasing means 66 for biasing the first longitudinal seal groove 52 against the second side wall 62. In this embodiment, there is a plurality of biasing means 66 arranged in a spaced apart arrangement along the length of the first longitudinal seal groove 52.

Each biasing means 66 comprises a respective protrusion 68 and a respective indentation 69. The protrusion 68 is formed in the first side wall 60. The protrusion 68 extends from the first side wall 60 towards the second side wall 62. The indentation 69 is formed in the second side wall 62 opposite to the protrusion 68.

Sealing grooves, such as the first and second longitudinal seal grooves 50, 52, may provide a leakage passage for gases between the low vacuum and high vacuum ends of the pump. In this embodiment, the longitudinal sealing members 26, 28 are biased against the pumping chamber sides (i.e. the innermost sides, with respect to the pumping chambers (s)) of the longitudinal seal grooves 50, 52. This advantageously tends to block this leak passage.

In this embodiment, first and second longitudinal seal grooves 50, 52 are wider than the longitudinal sealing members 26, 28 located therein. This tends to provide freedom for some lateral movement and the ability for the sealing gasket 20 to expand, for example due to the heating and/or compression of the sealing gasket 20.

In some embodiments, one or more protrusions are formed in the second side wall and extend towards the first side wall, and one or more indentations are formed in the first side wall opposite to respective protrusions.

Preferably, the longitudinal seal grooves 50, 52 each have a constant width and thus tend to be machinable in one pass with one tool. This tends to provide an advantage over grooves which, for example, comprises one or more sections of reduced width for gripping the sealing gasket. Furthermore, the absence of such narrowed sections tends to reduce the chances of there being pinch points for the gasket as it expands under compression and temperature changes.

Figure 7 is a schematic illustration (not to scale) showing the first closed-shape sealing member 22 located in a first closed-shape seal groove 54. It will be appreciated by those skilled in the art that the second closed-shape sealing member 24 is located in the second closed-shape seal groove 56 in similar fashion.

The first closed-shape seal groove 54 may be formed in end surfaces of the shell stators 12, 14 and/or a joining surface of the end plate 18.

The closed-shape seal groove 54 comprises a first side wall 70, a second side wall 72 opposite to the first side wall 70, and a bottom surface 74 disposed between the first side wall 70 and the second side wall 72. The first side wall 70 is the surface of the first closed-shape seal groove 54 furthest from the centre of the closed shape defined by the first closed-shape seal groove 54. The second side wall 72 is the surface of first closed-shape seal groove 54 closest to the centre of the closed shape defined by the first closed-shape seal groove 54. The bottom surface 74 is opposite to an opening of the first closed-shape seal groove 54.

The first closed-shape seal groove 54 comprises biasing means 76 for biasing the first closed-shape seal groove 54 towards a central portion of the first closed-shape seal groove 54. In this embodiment, there is a plurality of biasing means 76 arranged in a spaced apart arrangement about the first closed-shape seal groove 54. For reasons of clarity, only some of the biasing means 76 are indicated by reference symbols in Figure 7.

Each biasing means 76 comprises a respective protrusion 78 and a respective indentation 79. The protrusion 78 is formed in either the first side wall 70 or the second side wall 72, and extends towards the opposite side wall 70, 72. The indentation 79 is formed in the other of the second side wall 72 or the first side wall 70, and is opposite to the protrusion 78.

In this embodiment, first and second closed-shape seal grooves 54, 56 are wider than the first and second closed-shape sealing members 22, 24 located therein. This tends to provide freedom for some lateral/radial movement and the ability for the sealing gasket 20 to expand, for example due to the heating and/or compression of the sealing gasket 20. Further, by biasing the first and second closed-shape sealing members 22, 24 towards the central portions of the closed-shape seal grooves 54, 56, expansion of the sealing members 22, 24 in both inward and outward radial directions tends to be permitted.

Preferably, the closed-shape seal grooves 54, 56 each have a constant width and thus tend to be machinable in one pass with one tool. This tends to provide an advantage over grooves which, for example, comprise one or more sections of reduced width for gripping the sealing gasket. Furthermore, the absence of such narrowed sections tends to reduce the chances of there being pinch points for the gasket as it expands under compression and temperature changes.

In the above embodiments, each protrusion may be a continuous curved hump or bump. Preferably, protrusions omit discontinuities or sharp corners, i.e. they are smooth. This advantageously tends to reduce the likelihood of damage to the sealing gasket.

In the above embodiments, each indentation may be a continuous curved indentation, cavity, or void. Preferably, indentations omit discontinuities or sharp corners, i.e. they are smooth. This advantageously tends to reduce the likelihood of damage to the sealing gasket.

Use of biasing or positioning means that use only structural features of the sealing grooves for positions the sealing gasket within the sealing groove advantageously tends to allow for the use of sealing gaskets having simpler geometries. This tends to facilitate design, manufacture, and cost of the sealing gaskets. Sealing gaskets tend to require repair or replacement relatively frequently compared to, for example, the shell stators or end plates.

The sealing gasket tends to be easy to install into a housing or a vacuum pump.

It will be appreciated that the cord and the gasket can have different shapes or thicknesses to suit the arrangement of the housing.

In the above embodiments, the sealing gasket is a continuous one-piece sealing gasket. However, in other embodiments, the sealing gasket comprises multiple separate parts that are joined together. The multiple parts may be joined together by any joining means or methods, such as using an adhesive, fusion, or via an interference fit.

In the above embodiments, the sealing gasket has substantially constant cross-section over its parts. However, in other embodiments, the sealing gasket has non-constant cross-section.

In the above embodiments, the sealing gasket has square or rectangular cross-section. However, in other embodiments, some or all of the sealing gasket has an alternative cross-section other than square or rectangular, such as circular, triangular, oval, etc.

In the above embodiments, the sealing gasket may be made of an elastomer. In some embodiments, the sealing gasket may be made of a different, deformable material, for example, a metal.

Although the major faces of the sealing gasket in the above embodiments are substantially planar, it will be appreciated that they may be any shape which is suitable for engaging with the major faces of the end plates and the adjacent faces of the shell stators.

Although illustrative embodiments of the invention have been disclosed in detail herein, with reference to the accompanying drawings, it is understood that the invention is not limited to the precise embodiment and that various changes and modifications can be effected therein by one skilled in the art without departing from the scope of the invention as defined by the appended claims.

### Reference numeral list

10 - housing
12, 14 - shell stators
16, 18 - end plates
20 - sealing gasket
22 - first closed-shape sealing member
24 - second closed-shape sealing member
26 - first longitudinal sealing member
28 - second longitudinal sealing member
30 - first surface
32 - second surface
34 - first radially inner surface
36 - first radially outer surface
40 - third surface
42 - fourth surface
44 - second radially inner surface
46 - second radially outer surface
s40-s48 - method steps
50, 52 - longitudinal seal grooves
54, 56 - closed-shape seal grooves
60 - first side wall of longitudinal seal groove
62 - second side wall of longitudinal seal groove
64 - bottom surface of longitudinal seal groove
66 - biasing means of longitudinal seal groove
68 - protrusion
69 - indentation
70 - first side wall of closed-shape seal groove
72 - second side wall of closed-shape seal groove
74 - bottom surface of closed-shape seal groove
76 - biasing means of closed-shape seal groove
78 - protrusion
79 - indentation

## Claims

1. A system comprising:
a shell stator (12) for a vacuum pump, the shell stator (12) comprising:
a seal groove (50,54) formed in a surface of the shell stator (12), the seal groove (50,54) being defined by a first side wall (60,70), a second side wall (62,72) opposite to the first side wall (60,70), and a bottom surface (64,74) disposed between the first side wall (60,70) and the second side wall (62,72), the bottom surface (74,74) being opposite to an opening of the seal groove (50,54); wherein
the seal groove (50,54) comprises:
a protrusion (68,78) formed in the first side wall (60,70) and extending towards the second side wall (62,72); and
an indentation (69,79) formed in the second side wall (62,72) opposite to the protrusion (68,78); and
a sealing gasket (20) disposed in the seal groove (50,54);
**characterised in that**
the protrusion (68,78) biases at least part of the sealing gasket (20) against the second side wall (62,72).

2. The system of claim 1, wherein the protrusion (68,78) is a continuous curved hump.

3. The system of any preceding claim, wherein the indentation (69,79) is a continuous curved indentation.

4. The system of any preceding claim, wherein the seal groove (50,54) comprises:
a plurality of protrusions (68,78) formed in the first side wall (60,70) and extending towards the second side wall (62,72); and
a plurality of indentations (69,79) formed in the second side wall (62,72), each indentation (69,79) of the plurality of indentations (69,79) being opposite to a respective protrusion (68,78) of the plurality of protrusions (68,78).

5. The system of any preceding claim, wherein the seal groove (50,54) is formed in a joining surface of the shell stator (12), the joining surface being for receiving a further shell stator (14) thereby to define at least one pumping chamber.

6. The system of any preceding claim, wherein the seal groove (54) is formed in an end surface of the shell stator (12), the end surface being for receiving an end piece (16,18).

7. The system of any preceding claim, further comprising:
a further seal groove (52,56) formed in the surface of the shell stator (12), the further seal groove (52,56) being defined by a third side wall, a fourth side wall opposite to the third side wall, and a further bottom surface disposed between the third side wall and the fourth side wall, the further bottom surface being opposite to an opening of the further seal groove (52,56); wherein
the further seal groove (52,56) comprises:
a further protrusion formed in the third side wall and extending towards the fourth side wall; and
a further indentation formed in the fourth side wall opposite to the further protrusion.

8. The system of claim 7, wherein the first side wall (60,70) and the third side wall are the outermost walls, and the second side wall (62,72) and the fourth side wall are the innermost walls.

9. The system of claim 7 or 8, further comprising a curved seal groove (54,56) formed in an end surface of the shell stator (12,14), the curved seal groove (54,56) being formed between the seal groove (50) and the further seal groove (52).

10. The system of any preceding claim, wherein a thickness of the sealing gasket (20) in a direction from the first side wall (60,70) to the second side wall (60,70) is less than the size of the seal groove (50,54) in said direction.

11. The system of any preceding claim, wherein the sealing gasket (20) has substantially uniform thickness.

12. A vacuum pump, comprising:
the system of any preceding claim including a further shell stator (14) defining at least one pumping with the shell stator (12);
end pieces (16,18) mounted at either end of the shell stators (12,14); and
the sealing gasket (20) disposed between the shell stators (12,14) and the end pieces (16,18).

13. The vacuum pump of claim 12 when dependent on claim 7, wherein:
the first side wall (60,70) and the third side wall are the outermost walls relative to the at least one pumping chamber;
the second side wall (62,72) and the fourth side wall are the innermost walls relative to the at least one pumping chamber;
the sealing gasket (20) is also disposed in the further seal groove; and
the protrusion (68,78) and the further protrusion bias at least part of the sealing gasket (20) against the innermost side walls.

14. The vacuum pump of claim 12 or 13, further comprising:
two closed-shape sealing grooves (54,56), each closed-shape sealing groove (54,56) being formed in a respective end of the shell stators (12,14); wherein
the sealing gasket (20) comprises two sealing members (22,24) each defining a closed shape, each of the sealing members (22,24) being disposed in a respective one of the closed-shape sealing grooves (54,56);
each closed-shape sealing groove (54,56) is defined by an outer wall (70), an inner wall (72) opposite to the outer wall (70), and a bottom surface (74) disposed between the outer wall (70) and the inner wall (72), the bottom surface (74) being opposite to an opening of the closed-shape sealing groove (54,56); wherein
each closed-shape sealing groove (54,56) comprises:
a protrusion (78) formed in the outer wall (70) and extending towards the inner wall (72); and
an indentation (79) formed in the inner wall (72) opposite to the protrusion (78); and
the protrusion (78) of a closed-shape sealing groove (54,56) biases at least part of the sealing members (22,24) disposed in that closed-shape sealing groove (54,56) against the inner wall (72) of that closed-shape sealing groove (54,56).

## Patentansprüche

1. System, umfassend:
einen Mantelstator (12) für eine Vakuumpumpe, wobei der Mantelstator (12) Folgendes umfasst:
eine in einer Oberfläche des Mantelstators (12) gebildete Dichtungsnut (50, 54), wobei die Dichtungsnut (50, 54) durch eine erste Seitenwand (60, 70), eine zweite Seitenwand (62, 72) gegenüber der ersten Seitenwand (60, 70) und eine zwischen der ersten Seitenwand (60, 70) und der zweiten Seitenwand (62, 72) angeordnete Unterseite (64, 74) definiert ist, wobei die Unterseite (74, 74) einer Öffnung der Dichtungsnut (50, 54) gegenüberliegt;
wobei
die Dichtungsnut (50, 54) Folgendes umfasst:
einen Vorsprung (68, 78), der in der ersten Seitenwand (60, 70) gebildet ist und sich in Richtung der zweiten Seitenwand (62, 72) erstreckt; und
eine Vertiefung (69, 79), die in der zweiten Seitenwand (62, 72) gegenüber dem Vorsprung (68, 78) gebildet ist; und
einen Dichtungsring (20), der in der Dichtungsnut (50, 54) angeordnet ist;
**dadurch gekennzeichnet, dass**
der Vorsprung (68, 78) mindestens einen Teil des Dichtungsrings (20) gegen die zweite Seitenwand (62, 72) vorbelastet.

2. System nach Anspruch 1, wobei der Vorsprung (68, 78) ein kontinuierlich gewölbter Höcker ist.

3. System nach einem der vorhergehenden Ansprüche, wobei die Vertiefung (69, 79) eine kontinuierlich gewölbte Vertiefung ist.

4. System nach einem der vorhergehenden Ansprüche, wobei die Dichtungsnut (50, 54) Folgendes umfasst:
einen Mehrzahl von Vorsprüngen (68, 78), die in der ersten Seitenwand (60, 70) gebildet sind und sich in Richtung der zweiten Seitenwand (62, 72) erstrecken; und
eine Mehrzahl von Vertiefungen (69, 79), die in der zweiten Seitenwand (62, 72) gebildet sind, wobei jede Vertiefung (69, 79) der Mehrzahl von Vertiefungen (69, 79) gegenüber einem entsprechenden Vorsprung (68, 78) der Mehrzahl von Vorsprüngen (68, 78) liegt.

5. System nach einem der vorhergehenden Ansprüche, wobei die Dichtungsnut (50, 54) in einer Verbindungsfläche des Mantelstators (12) gebildet ist, wobei die Verbindungsfläche zum Aufnehmen eines weiteren Mantelstators (14) dient, um dadurch mindestens eine Pumpenkammer zu definieren.

6. System nach einem der vorhergehenden Ansprüche, wobei die Dichtungsnut (54) in einer Stirnfläche des Mantelstators (12) gebildet ist, wobei die Stirnfläche zum Aufnehmen eines Endstücks (16, 18) dient.

7. System nach einem der vorhergehenden Ansprüche, ferner umfassend:
eine weitere in der Oberfläche des Mantelstators (12) gebildete Dichtungsnut (52, 56), wobei die Dichtungsnut (52, 56) durch eine dritte Seitenwand, eine vierte Seitenwand gegenüber der dritten Seitenwand und eine zwischen der dritten Seitenwand und der vierten Seitenwand angeordnete weitere Unterseite definiert ist, wobei sich die weitere Unterseite gegenüber einer Öffnung der weiteren Dichtungsnut (52, 56) befindet; wobei
die weitere Dichtungsnut (52, 56) Folgendes umfasst:
einen weiteren Vorsprung, der in der dritten Seitenwand gebildet sind und sich in Richtung der vierten Seitenwand erstreckt; und
eine weitere Vertiefung, die in der vierten Seitenwand gegenüber dem weiteren Vorsprung gebildet ist.

8. System nach Anspruch 7, wobei die erste Seitenwand (60, 70) und die dritte Seitenwand die äußersten Wände sind und die zweite Seitenwand (62, 72) und die vierte Seitenwand die innersten Wände sind.

9. System nach Anspruch 7 oder 8, ferner umfassend eine gewölbte Dichtungsnut (54, 56), die in einer Stirnfläche des Mantelstators (12, 14) gebildet ist, wobei die gewölbte Dichtungsnut (54, 56) zwischen der Dichtungsnut (50) und der weiteren Dichtungsnut (52) gebildet ist.

10. System nach einem der vorgehenden Ansprüche, wobei eine Dicke des Dichtungsrings (20) in einer Richtung von der ersten Seitenwand (60, 70) zur zweiten Seitenwand (60, 70) kleiner als die Größe der Dichtungsnut (50, 54) in dieser Richtung ist.

11. System nach einem der vorhergehenden Ansprüche, wobei der Dichtungsring (20) eine im Wesentlichen gleichmäßige Dicke aufweist.

12. Vakuumpumpe, umfassend:
das System nach einem der vorhergehenden Ansprüche, das einen weiteren Mantelstator (14) beinhaltet, der mit dem Mantelstator (12) wenigstens eine Pumpenkammer definiert;
Endstücke (16, 18), die an jedem Ende der Mantelstatoren (12, 14) montiert sind; und
den Dichtungsring (20), der zwischen den Mantelstatoren (12, 14) und den Endstücken (16, 18) angeordnet ist.

13. Vakuumpumpe nach Anspruch 12, wenn abhängig von Anspruch 7, wobei:
die erste Seitenwand (60, 70) und die dritte Seitenwand relativ zu der mindestens einen Pumpenkammer die äußersten Wände sind;
die zweite Seitenwand (62, 72) und die vierte Seitenwand relativ zu der mindestens einen Pumpenkammer die innersten Wände sind;
der Dichtungsring (20) auch in der weiteren Dichtungsnut angeordnet ist;
und
der Vorsprung (68, 78) und der weitere Vorsprung mindestens einen Teil des Dichtungsrings (20) gegen die innersten Seitenwände vorbelasten.

14. Vakuumpumpe nach Anspruch 12 oder 13, ferner umfassend:
zwei Dichtungsringe (54, 56) mit geschlossener Form, wobei jeder Dichtungsring (54, 56) mit geschlossener Form in einem entsprechenden Ende der Mantelstatoren (12, 14) gebildet ist; wobei
der Dichtungsring (20) zwei Dichtungselemente (22, 24) umfasst, die jeweils eine geschlossene Form definieren, wobei jedes der Dichtungselemente (22, 24) in einer entsprechenden der Dichtungsnuten (54, 56) mit geschlossener Form angeordnet ist;
jede Dichtungsnut (54, 56) mit geschlossener Form durch eine äußere Wand (70), eine innere Wand (72) gegenüber der äußeren Wand (70) und eine zwischen der äußeren Wand (70) und der inneren Wand (72) angeordnete Unterseite (74) definiert ist, wobei die Unterseite (74) gegenüber einer Öffnung der Dichtungsnut (54, 56) mit geschlossener Form angeordnet ist; wobei
jede Dichtungsnut (54, 56) mit geschlossener Form Folgendes umfasst:
einen Vorsprung (78), der in der Außenwand (70) gebildet ist und sich in Richtung der Innenwand (72) erstreckt; und
eine Vertiefung (79), die in der Innenwand (72) gegenüber dem Vorsprung (78) gebildet ist; und
der Vorsprung (78) einer Dichtungsnut (54, 56) mit geschlossener Form mindestens einen Teil der in dieser Dichtungsnut (54, 56) mit geschlossener Form angeordneten Dichtungselemente (22, 24) gegen die Innenwand (72) dieser Dichtungsnut (54, 56) mit geschlossener Form vorbelastet.

## Revendications

1. Système comprenant :
un stator coque (12) pour une pompe à vide, le stator coque (12) comprenant :
une gorge d'étanchéité (50, 54) formée dans une surface du stator coque (12), la gorge d'étanchéité (50, 54) étant définie par une première paroi latérale (60, 70), une deuxième paroi latérale (62, 72) opposée à la première paroi latérale (60, 70), et une surface de fond (64, 74) disposée entre la première paroi latérale (60, 70) et la deuxième paroi latérale (62, 72), la surface de fond (74, 74) étant opposée à une ouverture de la gorge d'étanchéité (50, 54) ; dans lequel
la gorge d'étanchéité (50, 54) comprend :
une saillie (68, 78) formée dans la première paroi latérale (60, 70) et s'étendant vers la deuxième paroi latérale (62, 72) ; et
une indentation (69, 79) formée dans la deuxième paroi latérale (62, 72) à l'opposé de la saillie (68, 78) ; et
un joint d'étanchéité (20) disposé dans la gorge d'étanchéité (50, 54) ;
**caractérisé en ce que**
la saillie (68, 78) sollicite au moins une partie du joint d'étanchéité (20) contre la deuxième paroi latérale (62, 72).

2. Système selon la revendication 1, dans lequel la saillie (68, 78) est une bosse incurvée continue.

3. Système selon une quelconque revendication précédente, dans lequel l'indentation (69, 79) est une indentation incurvée continue.

4. Système selon une quelconque revendication précédente, dans lequel la gorge d'étanchéité (50, 54) comprend :
une pluralité de saillies (68, 78) formées dans la première paroi latérale (60, 70) et s'étendant vers la deuxième paroi latérale (62, 72) ; et
une pluralité d'indentations (69, 79) formées dans la deuxième paroi latérale (62, 72), chaque indentation (69, 79) de la pluralité d'indentations (69, 79) étant opposée à une saillie (68, 78) respective de la pluralité de saillies (68, 78).

5. Système selon une quelconque revendication précédente, dans lequel la gorge d'étanchéité (50, 54) est formée dans une surface de jonction du stator coque (12), la surface de jonction étant destinée à recevoir un stator coque (14) supplémentaire pour ainsi définir au moins une chambre de pompage.

6. Système selon une quelconque revendication précédente, dans lequel la gorge d'étanchéité (54) est formée dans une surface d'extrémité du stator coque (12), la surface d'extrémité étant destinée à recevoir une pièce d'extrémité (16, 18).

7. Système selon une quelconque revendication précédente, comprenant en outre :
une gorge d'étanchéité supplémentaire (52, 56) formée dans la surface du stator coque (12), la gorge d'étanchéité supplémentaire (52, 56) étant définie par une troisième paroi latérale, une quatrième paroi latérale opposée à la troisième paroi latérale, et une surface de fond supplémentaire disposée entre la troisième paroi latérale et la quatrième paroi latérale, la surface de fond supplémentaire étant opposée à une ouverture de la gorge d'étanchéité supplémentaire (52, 56) ; dans lequel
la gorge d'étanchéité supplémentaire (52, 56) comprend :
une saillie supplémentaire formée dans la troisième paroi latérale et s'étendant vers la quatrième paroi latérale ; et
une indentation supplémentaire formée dans la quatrième paroi latérale à l'opposé de la saillie supplémentaire.

8. Système selon la revendication 7, dans lequel la première paroi latérale (60, 70) et la troisième paroi latérale sont les parois les plus externes, et la deuxième paroi latérale (62, 72) et la quatrième paroi latérale sont les parois les plus internes.

9. Système selon la revendication 7 ou 8, comprenant en outre une gorge d'étanchéité incurvée (54, 56) formée dans une surface d'extrémité du stator coque (12, 14), la gorge d'étanchéité incurvée (54, 56) étant formée entre la gorge d'étanchéité (50) et la gorge d'étanchéité supplémentaire (52).

10. Système selon une quelconque revendication précédente, dans lequel une épaisseur du joint d'étanchéité (20) dans une direction allant de la première paroi latérale (60, 70) à la deuxième paroi latérale (60, 70) est inférieure à la taille de la gorge d'étanchéité (50, 54) dans ladite direction.

11. Système selon une quelconque revendication précédente, dans lequel le joint d'étanchéité (20) a une épaisseur sensiblement uniforme.

12. Pompe à vide, comprenant :
le système selon une quelconque revendication précédente incluant un stator coque (14) supplémentaire définissant au moins un pompage avec le stator coque (12) ;
des pièces d'extrémité (16, 18) montées à chaque extrémité des stators coque (12, 14) ; et
le joint d'étanchéité (20) disposé entre les stators coque (12, 14) et les pièces d'extrémité (16, 18).

13. Pompe à vide selon la revendication 12 lorsqu'elle dépend de la revendication 7, dans laquelle :
la première paroi latérale (60, 70) et la troisième paroi latérale sont les parois les plus externes par rapport à l'au moins une chambre de pompage ;
la deuxième paroi latérale (62, 72) et la quatrième paroi latérale sont les parois les plus internes par rapport à l'au moins une chambre de pompage ;
le joint d'étanchéité (20) est également disposé dans la gorge d'étanchéité supplémentaire ; et
la saillie (68, 78) et la saillie supplémentaire sollicitent au moins une partie du joint d'étanchéité (20) contre les parois latérales les plus internes.

14. Pompe à vide selon la revendication 12 ou 13, comprenant en outre :
deux gorges d'étanchéité de forme fermée (54, 56), chaque gorge d'étanchéité de forme fermée (54, 56) étant formée dans une extrémité respective des stators coque (12, 14) ;
dans laquelle
le joint d'étanchéité (20) comprend deux éléments d'étanchéité (22, 24) définissant chacun une forme fermée, chacun des éléments d'étanchéité (22, 24) étant disposé dans une gorge respective des gorges d'étanchéité de forme fermée (54, 56) ;
chaque gorge d'étanchéité de forme fermée (54, 56) est définie par une paroi extérieure (70), une paroi intérieure (72) opposée à la paroi extérieure (70), et une surface de fond (74) disposée entre la paroi extérieure (70) et la paroi intérieure (72), la surface de fond (74) étant opposée à une ouverture de la gorge d'étanchéité de forme fermée (54, 56) ;
dans laquelle
chaque gorge d'étanchéité de forme fermée (54, 56) comprend :
une saillie (78) formée dans la paroi extérieure (70) et s'étendant vers la paroi intérieure (72) ; et
une indentation (79) formée dans la paroi intérieure (72) à l'opposé de la saillie (78) ; et
la saillie (78) d'une gorge d'étanchéité de forme fermée (54, 56) sollicite au moins une partie des éléments d'étanchéité (22, 24) disposés dans cette gorge d'étanchéité de forme fermée (54, 56) contre la paroi intérieure (72) de cette gorge d'étanchéité de forme fermée (54, 56).
